# EUROPÄISCHE PATENTANMELDUNG

(11) **EP 4 741 132 A1**
(43) Veröffentlichungstag der Anmeldung: **13.05.2026**
(21) Anmeldenummer: 24212182.0
(22) Anmeldetag: 11.11.2024
(51) Int. Cl.: B29B 17/04, C08J 11/02

(54) **VERFAHREN ZUM ABTRENNEN VON METALLEN UND/ODER WEICHMACHERN VON TEILCHEN MIT EINER POLYMEREN MATRIX**

(71) Anmelder: D&G Recycling GmbH, 86720 Nördlingen (DE)
(72) Erfinder: Deinert, Dr. Jürgen, 37115 Duderstadt (DE)
(74) Vertreter: REHBERG HÜPPE + PARTNER

(57) **Zusammenfassung**

Zum Abtrennen von Metallen (20) und/oder Weichmachern (19) von Teilchen (3) mit einer polymeren Matrix, werden die Teilchen (3) entweder als körnige Teilchen mit einer mittleren Ausgangsteilchengröße in einem ersten Teilchengrößenbereich von 1 mm bis 12 mm oder als flächige Teilchen mit einer Wandstärke von maximal 2 mm und einer mittleren Ausgangsteilchengröße in einem ersten Teilchengrößenbereich von 2 mm bis 100 mm bereitgestellt. Die bereitgestellten Teilchen (3) werden in einem flüssigen Lösungsmittel (5), das aus Lösungsmitteln ausgewählt ist, in welchen die polymere Matrix der Teilchen (3) ohne Auflösung der polymeren Matrix quillt, suspendiert (4), und die polymere Matrix der Teilchen (3) wird in dem Lösungsmittel (5) quellen gelassen. Auf die Teilchen (8) werden Scherkräfte (9) ausgeübt, um die gequollene polymere Matrix in Fragmente (10) mit einer mittleren Fragmentgröße in einem zweiten Teilchengrößenbereich von 0,05 mm bis 0,8 mm zu aufzubrechen. Die Fragmente (15) werden separat von den Metallen (20) und den Weichmachern (19) von dem Lösungsmittel (5) abgetrennt (18).

## Beschreibung

Die Erfindung bezieht sich auf ein Verfahren zum Abtrennen von Metallen und/oder Weichmachern von Teilchen mit einer polymeren Matrix.

Beim Recyclen vieler Kunststoffe sind in den Kunststoffen enthaltene Metalle und/oder Weichmacher sowie mit den Kunststoffen verbundene Metalle ein Problem. Vielfach stehen die in den Kunststoffen enthaltenen Metalle und Weichmacher einer Wiederverwendung der Kunststoffe grundsätzlich entgegen, weil sie die Wiederverwendbarkeit der Kunststoffe in technischer Hinsicht behindern und/oder weil sie wegen ihres Gesundheitsgefährdungspotentials als Zusätze zu Kunststoffen nicht mehr zulässig sind. Ein Beispiel für ein Metall, das lange Zeit bei der Herstellung von Kunststoffen eingesetzt wurde, jetzt aber nicht mehr zulässig ist, ist Blei. In vielen vorhandenen Kunststoffen kommt jedoch Blei, insbesondere als toxisches Bleisalz in erheblichen Konzentrationen vor. Ein weiteres besonders relevantes Metall ist Aluminium, das einerseits beispielsweise in Brandschutzzusätzen zu Kunststoff in Form von Bauxit vorliegen kann und das andererseits insbesondere in Form von Aluminiumfolie mit Kunststoffen verbunden sein kann. Die relevantesten Weichmacher, die einer unmittelbaren Wiederverwendung von Kunststoffen entgegenstehen, sind solche auf Basis von Phthalaten, die hier auch als Phthalat-Weichmacher bezeichnet werden.

Um eine Wiederverwendung von Kunststoffen, die zumindest potentiell störende oder verbotene Metalle und Weichmacher enthalten oder mit solchen Metallen verbunden sind, zu ermöglichen, müssen diese Metalle und Weichmacher sicher bis auf Restkonzentrationen unterhalb zulässiger Grenzwerte reduziert werden.

### STAND DER TECHNIK

Aus der JP 4 685 728 B2 ist ein Verfahren zum Gewinnen eines Rohmaterials aus einem Blei enthaltenden Weich-PVC-Ausgangsmaterial bekannt, bei dem ein Weichmacher und eine Bleiverbindung aus dem Ausgangsmaterial entfernt werden. Der Weichmacher kann ein Phthalat-Weichmacher sein. Das Ausgangsmaterial wird auf eine geeignete Größe zerkleinert und dann mit einer Mischung aus Kohlendioxyd in superkritischen Zustand und einem aliphatischen Alkohol mit 1 bis 3 Kohlenstoffatomen kontaktiert. Um Kohlendioxyd in einen superkritischen Zustand zu bringen, sind eine Temperatur und ein Druck oberhalb des kritischen Punkts bei 31 °C und 7,375 MPa einzustellen. Konkret erfolgt das Kontaktieren bei einer Temperatur von 55 °C und einem Druck von 10 MPa für 20 min. Wenn das Kontaktieren zweiundzwanzig Mal mit frischer Mischung wiederholt wird, ist die Restkonzentration des Weichmachers in dem PVC-Material kleiner als 10 ppm. Das mit der flüssigen Mischung als Bleicarbonat aus dem Ausgangsmaterial extrahierte Blei wird aus der flüssigen Mischung ausgefällt. Eine Angabe zur Restkonzentration des Bleis in dem PVC wird nicht gemacht. Das bekannte Verfahren ist durch den Einsatz von Kohlendioxyd im superkritischen Zustand sehr aufwändig.

### AUFGABE DER ERFINDUNG

Der Erfindung liegt die Aufgabe zugrunde, ein Verfahren zum Abtrennen von Metallen und Weichmachern von Teilchen mit einer polymeren Matrix aufzuzeigen, das mit begrenztem Aufwand dafür geeignet ist, verschiedene Kunststoffe mit enthaltenen Metallen und/oder Weichmachern sowie anhaftenden Metallen für eine Wiederverwendung aufzubereiten.

### LÖSUNG

Die Aufgabe der Erfindung wird durch ein Verfahren mit den Merkmalen des unabhängigen Anspruchs 1 gelöst. Die abhängigen Patentansprüche betreffen bevorzugte Ausführungsformen des erfindungsgemäßen Verfahrens.

### BESCHREIBUNG DER ERFINDUNG

Bei einem erfindungsgemäßen Verfahren zum Abtrennen von Metallen und/oder Weichmachern von Teilchen mit einer polymeren Matrix werden die Teilchen entweder als körnige, d. h. als in allen drei Dimensionen zumindest in etwa gleich weit ausgedehnte, Teilchen mit einer mittleren Ausgangsteilchengröße in einem ersten Teilchengrößenbereich von 1mm bis 12mm, vorzugsweise von 1 mm bis 5 mm, oder als flächige, d. h. als im Wesentlichen zweidimensionale, Teilchen mit einer Wandstärke kleiner als 2 mm, vorzugsweise kleiner als 1 mm, und einer mittleren Ausgangsteilchengröße in einem ersten Teilchengrößenbereich von 1 mm bis 100 mm, vorzugsweise von 2 mm bis 70 mm, bereitgestellt. Dazu kann es erforderlich sein, größere Teilchen zu zerkleinern. Dies kann auf irgendeine grundsätzlich bekannte Weise erfolgen.

Die bereitgestellten Teilchen werden in einem flüssigen Lösungsmittel, in welchem die polymere Matrix der Teilchen ohne Auflösung der polymeren Matrix quillt, suspendiert, und die polymere Matrix wird quellen gelassen. Das flüssige Lösungsmittel, im Folgenden kurz als "Lösungsmittel" bezeichnet, wird dabei aus solchen Lösungsmitteln ausgewählt, die zwar in die polymere Matrix der Teilchen eindringen, so dass diese quillt, die aber die polymere Matrix der Teilchen unter den Bedingungen, unter denen sie quellen gelassen wird, nicht auflösen. Das Lösungsmittel wird also bei dem erfindungsgemäßen Verfahren für die polymere Matrix nicht als Auflösungsmittel, sondern als Quellmittel ausgewählt und eingesetzt.

Nach dem Quellen werden Scherkräften auf die Teilchen ausgeübt, um die gequollene polymere Matrix in Fragmente mit einer mittleren Fragmentgröße in einem zweiten Teilchengrößenbereich von 0,05 mm bis 0,8 mm, vorzugsweise von 0,1 mm bis 0,5 mm, aufzubrechen. Erst die Scherkräfte, die bei dem erfindungsgemäßen Verfahren kontrolliert eingesetzt werden, um die mittlere Fragmentgröße in dem zweiten Teilchengrößenbereich einzustellen, führen also dazu, dass die polymere Matrix der gequollenen Teilchen aufgebrochen wird. Aber auch dann löst sich die polymere Matrix nicht in dem Lösungsmittel auf, sondern jedes der Fragmente, in die die gequollenen Teilchen aufgebrochen werden, weist einen zusammenhängenden Teil der polymeren Matrix auf. Die Fragmente werden separat von den Metallen und/oder den Weichmachern von dem Lösungsmittel abgetrennt.

Weiterhin kann bei dem erfindungsgemäßen Verfahren eine Zusammensetzung des Lösungsmittels derart eingestellt werden, dass die Metalle und/oder die Weichmacher mit dem Lösungsmittel aus den Fragmenten extrahiert werden. Alternativ oder zusätzlich kann zu dem Lösungsmittel ein mit dem Lösungsmittel nicht mischbares, zusätzliches Extraktionsmittel, das auch als zweites Lösungsmittel bezeichnet werden kann, hinzugefügt werden, um gemeinsam mit dem Lösungsmittel die Metalle und die Weichmacher aus den Fragmenten zu extrahieren.

Dieser Schritt des Einstellens der Zusammensetzung des Lösungsmittels und/oder des Hinzufügens des zusätzlichen Extraktionsmittels kann bereits vor dem Suspendieren der bereitgestellten Teilchen in dem Lösungsmittel oder vor dem Ausüben der Scherkräfte auf die gequollenen Teilchen oder erst dann erfolgen, wenn die gequollenen Teilchen bereits in die Fragmente aufgebrochen sind. Es versteht sich, dass die Fragmente bei dem erfindungsgemäßen Verfahren auch tatsächlich mit dem Lösungsmittel oder mit dem Lösungsmittel und dem zusätzlichen Extraktionsmittel extrahiert werden. Anschließend werden die extrahierten Fragmente mit ihrer weiter existenten polymeren Matrix von dem Lösungsmittel abgetrennt. Letztlich erfolgt ein Abtrennen der Weichmacher und der Metalle von dem abgetrennten Lösungsmittel. Damit liegen die von den Metallen und Weichmachern abgereinigte polymere Matrix, die Metalle und die Weichmacher getrennt voneinander vor und können entweder direkt oder nach Aufbereitung im Hinblick auf ihre chemische Form wiederverwendet werden.

Das bei dem erfindungsgemäßen Verfahren zum Einsatz kommende Lösungsmittel hat eine vielfache Funktion. Indem die Teilchen in ihm quellen, wird ihre polymere Matrix aufgeweitet. Damit werden in die polymere Matrix eingebettete Metalle und Weichmacher für die Extraktion leichter zugänglich. Zudem können die in dem Lösungsmittel und unter Aufnahme des Lösungsmittels gequollenen Teilchen durch das Ausüben der Scherkräfte in die Fragmente aufgebrochen werden, wodurch sich ihre Oberfläche vergrößert und sich die zum Extrahieren der Metalle und Weichmacher aus der polymeren Matrix zurückzulegenden Diffusionswege verkürzen. Letztlich dient das Lösungsmittel, ggf. in Kombination mit dem zusätzlichen Extraktionsmittel, dazu, die Metalle und Weichmacher aus den Fragmenten der gequollenen Teilchen zu extrahieren, so dass die Metalle und Weichmacher beim Abtrennen der extrahierten Fragmente von dem Lösungsmittel zusammen mit dem Lösungsmittel von den extrahierten Fragmenten entfernt werden.

Die Teilchen können neben der polymeren Matrix, die erfindungsgemäß in die Fragmente aufgebrochen wird, eine weitere Matrix aufweisen, die zumindest in demselben Lösungsmittel nicht quillt und die auch nicht in Fragmente aufgebrochen wird. Diese Matrix kann eine weitere polymere Matrix anderer Zusammensetzung sein, die erst bei einer weiteren Durchführung des erfindungsgemäßen Verfahrens mit einem anderen Lösungsmittel in weitere Fragmente aufgebrochen wird, welche separat von den zuerst anfallenden Fragmenten anfallen. Die weitere polymere Matrix anderer Zusammensetzung kann aber auch komplett, das heißt so, wie sie in den Teilchen enthalten ist, geborgen werden. Letzteres gilt auch für eine weitere nichtpolymere Matrix, wie insbesondere eine metallische Matrix. Eine metallische Matrix, kann also in der Größe, wie sie in den Teilchen enthalten ist, als elementare Metalle, bei flächigen Teilchen typischerweise in Form von Metallflocken, geborgen werden. Alternativ kann eine metallische Matrix in dem Lösungsmittel und/oder dem zusätzlichen Extraktionsmittel aufgelöst und dann daraus ausgefällt werden. Auf diese Weise kann die metallische Matrix beispielsweise in ihre einzelnen metallischen Elemente zerlegt werden. Die Metalle der weiteren metallischen Matrix können die einzigen Metalle sein, die in relevanter Konzentration in den Teilchen enthalten sind. Nicht nur alternativ, sondern auch zusätzlich können in der polymeren Matrix, die erfindungsgemäß in die Fragmente aufgebrochen wird, zu entfernende Metalle enthalten sein.

Die polymere Matrix der Teilchen, die mit dem erfindungsgemäßen Verfahren aufbereitbar sind, kann eine Polyvinylchlorid(PVC)-Matrix, eine Polyvinylidenfluorid(PVDF)-Matrix, eine Polyethylen(PE)-Matrix, eine Low-Density-Polyethylen(LDPE)-Matrix oder eine High-Density-Polyethylen(HDPE)-Matrix sein. Zumindest für Teilchen mit einer dieser polymeren Matrizen ist das erfindungsgemäße Verfahren geeignet.

Die Weichmacher, die durch das erfindungsgemäße Verfahren abgetrennt werden können, sind insbesondere Phthalat-Weichmacher. So können die in den aufzubereitenden Teilchen enthaltenen Weichmacher überwiegend, d. h. zu mehr als 50 Gewichtsprozent, aus Phthalat-Weichmachern bestehen. Mit dem erfindungsgemäßen Verfahren können auch andere Weichmacher als Phthalat-Weichmacher abgetrennt werden. Hierzu zählen verschiedene als Weichmacher bekannte Alkylsulfonsäureester, Sebacinsäureesther, Zitronensäureester und Adipinsäureesther. Die Weichmacher können 25 Gewichtsprozent bis 75 Gewichtsprozent eines die polymere Matrix aufweisenden Bruchteils der Teilchen, der beispielsweise verbundene Metallfolien nicht umfasst, ausmachen. Vielfach liegt dieser Anteil der Weichmacher zwischen 30 Gewichtsprozent und 60 Gewichtsprozent.

Die Metalle, die mit den erfindungsgemäßen Verfahren von den Teilchen abgetrennt werden können, schließen insbesondere Blei und Aluminium ein. So können die in den Teilchen enthaltenen Metalle überwiegend, d. h. zu mehr als 50 Gewichtsprozent, Blei und/oder Aluminium sein. In jedem Fall können die Metalle in den Teilchen überwiegend in Form von Metallsalzen und/oder Metallhydroxyden vorliegen. Darüber hinaus können auch Metalle in elementarer Form in den Teilchen enthalten und/oder mit den Teilchen verbunden sein.

Das Quellenlassen der Teilchen kann unter solchen Randbedingungen durchgeführt werden, dass sich ihr Volumen beim Quellenlassen um 10 % bis 100% erhöht. Anders gesagt wird bei dem erfindungsgemäßen Verfahren eine mäßige Quellung der Teilchen in dem Lösungsmittel angestrebt.

Die gequollenen Teilchen werden bei dem erfindungsgemäßen Verfahren vorzugsweise in Fragmente aufgebrochen, deren mittlere Fragmentgröße nicht größer als 50 % der durch die Quellung angewachsenen mittleren Ausgangsteilchengröße und bei flächigen Teilchen zumindest nicht größer als deren durch die Quellung angewachsene Wandstärke und vorzugsweise nicht größer als 50 % der durch die Quellung angewachsenen Wandstärke ist. Die mittlere Fragmentgröße kann aber auch noch signifikant kleiner sein, solange die Fragmente nach ihrem Extrahieren noch als solche von dem Lösungsmittel abtrennbar sind.

Für das erfindungsgemäße Verfahren geeignete Lösungsmittel finden sich unter den als Lösungsmittel bekannten Kohlenwasserstoffen, Alkoholen und Ethern, die auch miteinander kombiniert werden können.

Als Kohlenwasserstoffe, d. h. als Lösungsmittel, deren Moleküle nur aus Kohlenstoff- und Wasserstoffatomen bestehen, kommen grundsätzlich alle Kohlenwasserstoffe in Betracht, die - gegebenenfalls unter erhöhtem Druck oder erhöhter Temperatur, als flüssiges Lösungsmittel einsetzbar sind. Dies schließt lineare, verzweigte, zyklische und aromatische sowie gesättigte und ungesättigte Kohlenwasserstoffe ein, wobei gesättigte Kohlenwasserstoffe bevorzugt sind. Die Zahl der Kohlenstoffatome der Kohlenwasserstoffe liegt dabei typischerweise im Bereich von 3 bis 11 und vorzugsweise im Bereich von Bereich von 5 bis 8. Unter dem Gesichtspunkt eines sicheren industriellen Einsatzes besonders geeignete Kohlenwasserstoffe schließen z. B. Pentan, Hexan und handelsübliche Mischungen von Kohlenwasserstoffen, wie Leichtbenzin, Petroleumbenzin und Weißöl ein. Kohlenwasserstoffe sind alleinigen Ausbildung des Lösungsmittels geeignet, insbesondere für eine polymere Matrix aus PE.

Geeignete Alkohole schließen Methanol, Ethanol, Isopropanol und Ethoxypropanol sowie Cyclohexanol ein. Ein besonders geeigneter Ether ist der zyklische Ether Tetrahydrofuran. Tetrahydrofuran kann insbesondere gemischt mit Ethanol oder Ethoxypropanol als Lösungsmittel eingesetzt werden, insbesondere für eine polymere Matrix aus PVC. Mit Hilfe des Mischungsverhältnisses zwischen Ether und Alkohol ist die Löslichkeit der polymeren Matrix in dem Lösungsmittel so einstellbar, dass die Teilchen wie beabsichtigt in ihm quellen und unter Einwirkung der Scherkräfte in die Fragmente aufbrechen. Konkret kann dafür ein Anteil von 65 bis 85 Volumenprozent Tetrahydrofuran (THF) bei einem Rest aus Alkohol eingestellt werden. 2-Methyltetrahydrofuran (2-MeTHF) und Cyclopentylmethylether (CPME) sind zwar bekannte "grüne" Alternativen zu THF, aber als Quellmittel bei dem erfindungsgemäßen Verfahren ungeeignet. Ein bei dem erfindungsgemäßen Verfahren zu THF alternatives Quellmittel ist Cyclohexanon.

Vorzugsweise weist das Lösungsmittel, das bei dem erfindungsgemäßen Verfahren zum Einsatz kommt, bei Normaldruck oder zumindest bei dem bei dem erfindungsgemäßen Verfahren eingestellten Arbeitsdruck, eine Siedetemperatur von mindestens 90 °C auf. Wenn dann die Temperatur des Lösungsmittels beim Quellenlassen und Extrahieren in einem Temperaturbereich von 20 K bis 10 K unterhalb der Siedetemperatur des Lösungsmittels eingestellt wird, werden während des Quellenlassens und Extrahierens keine größeren Mengen an Lösungsmittel verdampft. Dies ist energetisch günstig oder erfordert zumindest keinen größeren Aufwand für die Rückgewinnung der Verdampfungswärme. Grundsätzlich kann das erfindungsgemäße Verfahren aber auch bei der Siedetemperatur des Lösungsmittels unter Refluxieren des verdampften Lösungsmittels durchgeführt werden.

Zum Einstellen der Zusammensetzung des Lösungsmittels und/oder zum Hinzufügen des mit dem Lösungsmittel nicht mischbaren zusätzlichen Extraktionsmittels kann eine Säure zugesetzt werden. Wenn die Säure mit dem Lösungsmittel mischbar ist, kann mit der Säure ein pH-Wert des Lösungsmittels von nicht mehr als pH 5 und herab bis zu pH 1 eingestellt werden. Anderenfalls kann die Säure das mit dem Lösungsmittel nicht mischbare zusätzliche Extraktionsmittel sein und/oder dessen pH-Wert auf nicht mehr als pH 5 und herab bis zu pH 1 einstellen. Konkret kann die zugesetzte Säure Kohlensäure ein, die mit einem auf das Lösungsmittel einwirkenden CO₂-Partialdruck von mindestens 2,0 MPa zugesetzt wird. Vorzugsweise beträgt der CO₂-Partialdruck mindestens 2,5 MPa und nicht mehr als 5,0 MPa.

Alternativ zu einer Säure kann beim Einstellen des Lösungsmittels bzw. zum Hinzufügen eines mit dem Lösungsmittel nicht mischbaren zusätzlichen Extraktionsmittels eine Lauge zugesetzt werden. Wenn die Säure mit dem Lösungsmittel mischbar ist, kann mit Hilfe dieser Lauge ein pH-Wert des Lösungsmittels von mindestens pH 9 und bis zu pH 12 eingestellt werden. Anderenfalls kann die Lauge das mit dem Lösungsmittel nicht mischbare zusätzliche Extraktionsmittel sein und/oder dessen pH-Wert auf mindestens pH 9 und bis zu pH 12 einstellen. Konkret kann die Lauge eine wässrige oder alkoholische Lauge eines Alkali- oder Erdalkalimetalls sein, insbesondere Natronlauge oder Kalilauge. Die Natronlauge sollte mindestens 8 Gewichtsprozent Natriumhydroxyd enthalten, auch damit dem Lösungsmittel mit ihr möglichst wenig Wasser bzw. Ethanol hinzugefügt wird. Der Natriumhydroxydanteil kann über 8 Gewichtsprozent, beispielsweise bei 10 Gewichtsprozent, liegen und bei einer alkoholischen Natronlauge bis zur Lösungsgrenze reichen. Für Kalilauge gilt dasselbe.

Ist das Lösungsmittel mit der eingesetzten Säure oder Lauge nicht oder nur teilweise mischbar, die Säure oder Lauge also ein zusätzliches Extraktionsmittel, entsteht ein Zwei-Phasengemisch. Bei ausreichend großen Scherkräften während des Extrahierens sind aber auch dann kurze Diffusionswege und geringe Extraktionszeiten realisierbar.

Bei dem erfindungsgemäßen Verfahren können die Scherkräfte durch Rühren des Lösungsmittels mit den darin suspendierten Teilchen auf die Teilchen ausgeübt werden. In der Regel ist ein mäßiges Rühren für das Aufbrechen der gequollenen Teilchen ausreichend. Wenn größere Scherkräfte erforderlich sind, können die gequollenen Teilchen beispielweise zwischen gegenläufig rotierenden Scheiben hindurchgeführt werden.

Zum Abtrennen der extrahierten Fragmente von dem Lösungsmittel können die extrahierten Fragmente von dem Lösungsmittel abgefiltert werden. Um das Abfiltern zu erleichtern, kann es sinnvoll sein, die begrenzte Löslichkeit der Fragmente in dem Lösungsmittel noch weiter herabzusetzten. Ziel kann es beispielsweise sein, eine Agglomeration der gequollenen Fragmente bei Abtrennung des Lösungsmittels zu verhindern, weil dadurch ihre Rieselfähigkeit eingeschränkt wird, und die Entfernung des in den gequollenen Fragmenten enthaltenen Lösungsmittels behindert wird. Wenn die Lösungsfähigkeit des Lösungsmittels in Bezug auf die polymere Matrix der gequollenen Fragmente beispielsweise durch Zugabe eines Nichtlösers abgesenkt wird, geht die Quellung der Fragmente schnell zurück. Allerdings erhöht sich durch den Nichtlöser die Gesamtmenge der von den extrahierten Fragmenten zu entfernenden und aufzubereitenden Flüssigkeit.

Durch die Zugabe von Alkali- oder Erdalkalihydroxyden können insbesondere Blei und Bleiverbindungen in lösliche Plumbate und Aluminium sowie Aluminiumverbindungen in lösliche Aluminate überführt werden. Phthalat-Weichmacher werden in lösliches Natriumphthalat überführt.

Das erfindungsgemäße Verfahren zeichnet sich durch eine begrenzte Gesamtverfahrensdauer vom Suspendieren der Teilchen in dem Lösungsmittel bis zum Abtrennen der Fragmente von dem Lösungsmittel von nicht mehr als 60 Minuten aus. Oftmals kann eine Gesamtverfahrensdauer von nicht mehr als 30 Minuten erreicht werden; auch Verfahrensdauern herab bis zu 15 Minuten sind möglich. Beim Extrahieren werden sehr schnell alle oberflächennahen und dadurch direkt für das Lösungsmittel bzw. das Extraktionshilfsmittel zugänglichen Metalle und Weichmacher in Lösung gebracht. Das Extrahieren der Metalle und der Weichmacher aus dem Volumen der Fragmente ist durch die Geschwindigkeit der Diffusion in der gequollenen polymeren Matrix limitiert und läuft daher langsamer ab.

Die bei dem erfindungsgemäßen Verfahren erreichbaren Restkonzentration der Metalle und Weichmacher in den extrahierten Fragmenten betragen sicher weniger als 0,1 Gewichtsprozent und vorzugsweise nicht mehr als 0,05 Gewichtsprozent. Dabei beziehen sich diese Angaben in Gewichtsprozent auf die Trockenmasse der extrahierten Fragmente, die sich nach der vollständigen Entfernung des Lösungsmittels ergibt.

Zum Abtrennen der Metalle und/oder Weichmacher von dem Lösungsmittel, wobei die Metalle und Weichmacher vorzugsweise separat voneinander abgetrennt werden, kann die Löslichkeit der Metalle und/oder Weichmacher in dem Lösungsmittel durch Ändern des Drucks, der Temperatur, des pH-Werts und/oder der Zusammensetzung des Lösungsmittels gezielt herabgesetzt werden. Auf diese Weise kann eine fraktionierte Fällung der Metalle und Weichmacher aus dem Lösungsmittel durchgeführt werden. Eine Absenkung des Drucks des Lösungsmittels hat dabei in der Regel eine teilweise Verdampfung des Lösungsmittels und eine resultierende Reduktion der Temperatur des Lösungsmittels zur Folge. Auch ganz grundsätzlich kann das Lösungsmittel zum Abtrennen der Metalle und/oder Weichmacher von dem Lösungsmittel verdampft werden. Durch Kondensieren kann das Lösungsmittel anschließend zurückgewonnen werden. Dabei kann die Verdampfungswärme als Kondensationswärme in einem Carnot-Prozess zurückgewonnen werden.

Mit dem erfindungsgemäßen Verfahren können nicht nur originäre Phthalat-Weichmacher aus den Fragmenten extrahiert werden, sondern auch aus Phthalat-Weichmachern resultierende langkettige Alkohole. Diese können dann zum Beispiel mit Sebacaten, Sebacinsäure oder Zitronensäure zu wiederverwendbaren Weichmachern verestert werden.

Bei dem erfindungsmäßen Verfahren wird die polymere Matrix auch beim Extrahieren der Fragmente der gequollenen Teilchen nicht aufgelöst. Es können sich aber sowohl nicht vollständige vernetzte Oligomere, insbesondere Fremdoligomere, in dem Lösungsmittel lösen und mit diesem entfernt werden. Auf diese Weise wird durch das erfindungsgemäße Verfahren ein aufgereinigtes Polymer erhalten. In einer Ausführungsform des erfindungsgemäßen Verfahrens wird bei Teilchen, die neben der polymeren Matrix, die sich in dem Lösungsmittel nicht auflöst, eine weitere polymere Matrix aufweisen, diese weitere polymere Matrix in dem Lösungsmittel aufgelöst, um sie mit dem Lösungsmittel von der nicht aufgelösten polymeren Matrix abzutrennen. Wenn dann die Bestandteile der weiteren polymeren Matrix wieder von dem Lösungsmittel abgetrennt werden, können auch diese sortenrein wiederverwendet werden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer weiteren Matrix die Rede ist, ist dies so zu verstehen, dass genau eine weitere Matrix, zwei weitere Matrizes oder mehr weitere Matrizes vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

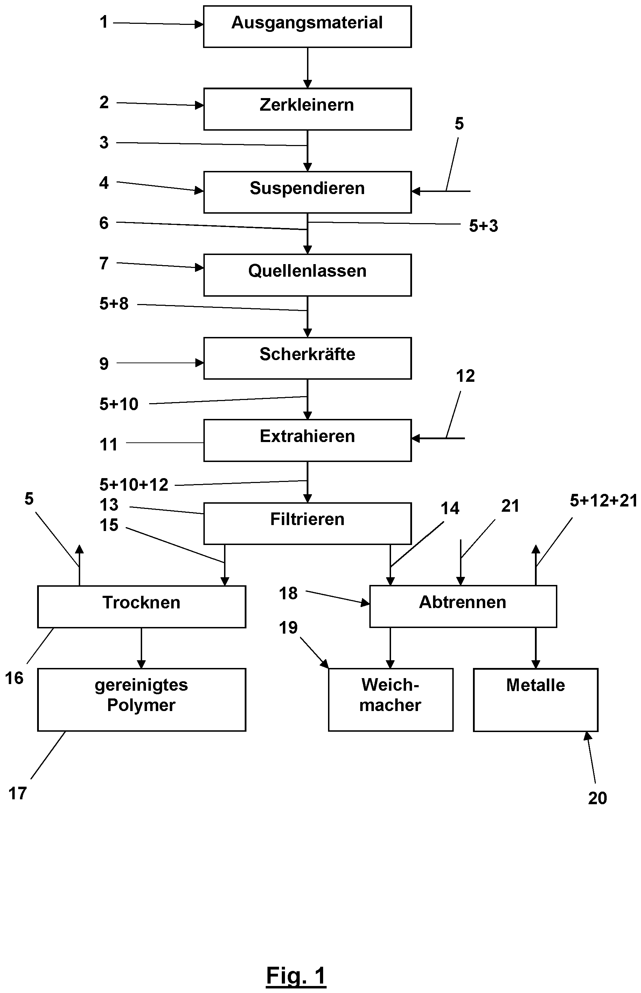

- **Fig. 1**: ist ein Ablaufdiagramm zu einer Ausführungsform des erfindungsgemäßen Verfahrens zum Abtrennen von Metallen und Weichmachern mit einer polymeren Matrix.

### FIGURENBESCHREIBUNG

Das in Fig. 1 illustrierte Verfahren geht von einem Ausgangsmaterial 1 aus, das durch Zerkleinern 2 in Form von Teilchen 3 bereitgestellt wird. Das Ausgangsmaterial umfasst eine polymere Matrix, in die Weichmacher, insbesondere Phthalat-Weichmacher, und Metalle eingebunden sind und die mit Metallfolie verbunden sein kann. Die Teilchen weisen eine mittlere Ausgangsteilchengröße in einem ersten Teilchengrößenbereich von 1 mm bis 5 mm auf. Beim Suspendieren 4 werden die Teilchen 3 in einem Lösungsmittel 5 aufgenommen, das ein begrenztes Lösungsvermögen für die polymere Matrix hat. Dabei kann eine Beladung der durch das Suspendieren 4 erhaltenen Suspension 6 mit den Teilchen 3 beispielsweise auf 5 Gewichtsprozent bis 10 Gewichtsprozent eingestellt werden. In der Suspension wird die polymere Matrix in den Teilchen 3 quellengelassen 7, wobei die polymere Matrix Lösungsmittel 5 aufnimmt, aber die polymere Matrix nicht aufgelöst wird. Auf die derart gequollenen Teilchen 8 werden Scherkräfte 9 ausgeübt, um die polymere Matrix der gequollene Teilchen 8 in Fragmente 10 aufzubrechen. Die Scherkräfte 9 und die Zeit der Einwirkung der Scherkräfte 9 werden in Abstimmung auf das Lösungsmittel so gewählt, dass die resultierenden Fragmente 10 eine mittlere Fragmentgröße in einem Teilchengrößenbereich von 0,1 mm bis 0,8 mm aufweisen, wobei die mittlere Fragmentgröße zugleich nicht größer als 50 % der durch das Quellenlassen 7 angewachsenen mittleren Ausgangsteilchengröße der gequollenen Teilchen 8 mit der gequollenen polymeren Matrix ist. Wenn die Teilchen 3 neben der in dem Lösungsmittel 5 quellenden polymeren Matrix keine weitere Matrix aufweisen, werden die Teilchen 3 komplett in die Fragmente aufgebrochen. Beim Extrahieren 11 werden aus den Fragmenten 10 in diesen enthaltene Weichmacher und Metalle sowie anhaftende Metalle extrahiert. Um das Extrahieren zu beschleunigen oder auch erst zu ermöglich, kann die Zusammensetzung des Lösungsmittels durch Zusätze 12, beispielsweise eine Lauge, eingestellt werden. Bei den Zusätzen 12 kann sich auch um mit dem Lösungsmittel 5 nicht lösbare Zusätze handeln, die dann ein zusätzliches Extraktionsmittel ausbilden. Alle oder ein Teil der Schritte des Suspendieren 4, Quellenlassen 7, Ausübens der Scherkräfte 9 und Extrahierens 11 können zusammengefasst werden. So kann das die Teilchen 3 aufnehmende Lösungsmittel 5 bereits gerührt werden und das Rühren kann über das Quellenlassen 7 hinweg zum Ausüben der Scherkräfte 9 und auch noch während des Extrahierens 11 aufrecht erhalten werden. Weiterhin versteht es sich, dass das Lösungsmittel 5 während der Ausführung der Schritte des Quellenlassen 7, Ausübens der Scherkräfte 9 und Extrahierens 11 - schrittweise oder kontinuierlich, letzteres beispielsweise durch Führen des Lösungsmittels im Gegenstrom - ausgetauscht werden kann, um hohe die Extraktion treibende Konzentrationsunterschiede über die Dauer des Verfahrens aufrechtzuerhalten. Bei einem an das Extrahieren 11 anschließenden Filtrieren 13 wird ein Filtrat 14 von den extrahierten Fragmenten 15 abgetrennt. Die extrahierten Fragmente 15 werden durch Entfernen von enthaltenen Resten des Lösungsmittels 5 getrocknet 16, wodurch ein gereinigtes Polymer 17 erhalten wird. Das gereinigte Polymer 17 ist in aller Regel auch entfärbt und von Fremdoligomeren befreit, weil Farbstoffe und Fremdoligomere in die Lösung und damit in das Filtrat 14 übergehen. Von dem Filtrat 14 werden beim Abtrennen 18, das als Fraktionierung durch sequentielles Fällen und/oder fraktionierte Destillation oder dergleichen durchgeführt werden kann, die in dem Ausgangsmaterial 1 enthaltenen Weichmacher 19 und Metalle 20 separiert. Dabei können die Weichmacher in ihrer Ursprungsform separiert werden. Die Metalle werden typischerweise als Teil einer chemischen Verbindung separiert, aus der sie dann zurückgewonnen werden können beim Abtrennen können Hilfsmittel 21 zugesetzt werden, die dann aber zusammen mit dem Lösungsmittel 5, und den Zusätzen 12 wieder von dem Weichmachern 19 und den Metallen 20 entfernt werden müssen. Wenn die Teilchen 3 neben der in dem Lösungsmittel 5 quellenden polymeren Matrix eine weitere, weder in dem Lösungsmittel 5 quellende und entsprechend nicht in Fragmente aufgebrechende, noch sich in dem Lösungsmittel 5 auflösende Matrix aufweisen, kann diese weitere Matrix komplett aus dem Lösungsmittel geborgen werden, beispielsweise durch Filtrieren mit einem gröberen Filter als beim anschließenden Filtrieren 13 zum Abtrennen der Fragmente 15. Wenn die weitere Matrix eine weitere polymere Matrix ist, kann die weitere polymere Matrix als Ausgangsmaterial 1 in einem weiteren Durchlauf des erfindungsgemäßen Verfahrens mit Hilfe eines anderen Lösungsmittels 5 und/oder anderer Zusätze 12 aufbereitet werden.

Nachstehend werden konkrete Ausführungsbeispiele des erfindungsgemäßen Verfahrens gegeben.

### Beispiel 1

| | |
|---|---|
| Ausgangsmaterial: | PVC/PVDF/Aluminiumlaminat (Blisterverpackung), flächige Teilchen mit einer Ausgangsteilchengröße zwischen 30 mm und 50 mm |
| Abtrennbare Störstoffe: | 30 Gewichtsprozent Aluminium, |
| Restkonzentration: | < 0,5 Gewichtsprozent |
| Fragmentierbare Komponente: | PVDF |
| Lösungsmittel: | Ethoxypropanol (nicht getrocknet, wasserhaltig) |
| Zusatz: | Kohlendioxid (>2,0 MPa) |
| Friktion: | Rührgeschwindigkeit 30 U/min |
| Temperatur: | 50 °C |
| Zeit: | 2 h |
| Bemerkung: | Das PVC und das elementare Aluminium fallen als Flocken an. |

### Beispiel 2

| | |
|---|---|
| Ausgangsmaterial: | PE/Aluminiumlaminat (Kaffeverpackung), flächige Teilchen mit einer Ausgangsteilchengröße zwischen 30 mm und 50 mm |
| Abtrennbare Störstoffe: | 50 Gewichtsprozent Aluminium |
| Restkonzentration: | < 0,5 Gewichtsprozent |
| Fragmentierbare Komponente: | PE |
| Lösungsmittel: | Pentan (80 °C, Druck < 0,8 MPa) |
| Zusatz: | Kein Zusatz: Das elementare Aluminium fällt als Flocken an. Natronlauge (10 Gewichtsprozent): Das Aluminium fällt als Natriumaluminatlösung an. |
| Friktion: | Rührgeschwindigkeit 20 U/min |
| Zeit: | 1 h |

### Beispiel 3

| | |
|---|---|
| Ausgangsmaterial: | LDPE, mineralisch flammgeschützt mit Bauxit, körnige Teilchen mit einer Ausgangsteilchengröße zwischen 1 mm und 5 mm |
| Abtrennbare Störstoffe: | 30 Gewichtsprozent Aluminiumhydroxid |
| Restkonzentration: | 0,5 Gewichtsprozent |
| Lösungsmittel: | 90 % Kohlenwasserstoff mit Siedebereich > 90 °C mit 5 % Ethanol |
| Zusatz: | Natronlauge mit 10 Gewichtsprozent Natriumhydroxid |
| Friktion: | Rührgeschwindigkeit 20 U/min |
| Zeit: | 1 h |
| Temperatur: | 90 °C |

### Beispiel 4

| | |
|---|---|
| Ausgangsmaterial: | HDPE, mineralisch flammgeschützt mit Aluminiumhydroxid, körnige Teilchen mit einer Ausgangsteilchengröße zwischen 1 mm und 5 mm |
| Abtrennbare Störstoffe: | 50 Gewichtsprozent Aluminiumhydroxid |
| Restkonzentration: | < 0,5 Gewichtsprozent |
| Lösungsmittel: | Kohlenwasserstoffgemisch mit Siedebereich > 90 °C |
| Zusatz: | Natronlauge mit 10 Gewichtsprozent Natriumhydroxid |
| Temperatur: | 80 °C |
| Zeit: | 1 h |

### Beispiel 5

| | |
|---|---|
| Ausgangsmaterial: | PVC-Recyclat aus Fensterprofil inkl. phthalathaltiger Dichtung, körnige Teilchen mit einer Ausgangsteilchengröße zwischen 1 mm und 5 mm |
| Abtrennbare Störstoffe: | 1,5 Gewichtsprozent Blei als Bleistearat und Bleioxid Gewichtsprozent gemischte Phtalatweichmacher |
| Lösungsmittel: | 70 % Tetrahydrofuran, 30 % Ethanol, gesättigt mit NaOH |
| Temperatur: | 55 °C |
| Verweilzeit: | 1 h |
| Rührgeschwindigkeit: | 60 U/min |

### Beispiel 6

| | |
|---|---|
| Ausgangsmaterial: | PVC-Recyclat aus Kabel, körnige Teilchen mit einer Ausgangsteilchengröße zwischen 1 mm und 5 mm |
| Abtrennbare Störstoffe: | Gemisch Bleiverbindungen, Dioctylphthalat |
| Lösungsmittel: | 75 % Tetrahydrofuran, 25 % Ethanol |
| Lauge: | Natronlauge mit 15 Gewichtsprozent Natriumhydroxid |
| Temperatur: | 55 °C |
| Verweilzeit: | 1 h |
| Rührgeschwindigkeit: | 60 U/min |

### BEZUGSZEICHENLISTE

- 1: Ausgangsmaterial
- 2: Zerkleinern
- 3: Teilchen
- 4: Suspendieren
- 5: Lösungsmittel
- 6: Suspension
- 7: Quellenlassen
- 8: gequollene Teilchen
- 9: Scherkräfte
- 10: Fragmente
- 11: Extrahieren
- 12: Zusätze
- 13: Filtrieren
- 14: Filtrat
- 15: extrahierte Fragmente
- 16: Trocknen
- 17: gereinigtes Polymer
- 18: Abtrennen
- 19: Weichmacher
- 20: Metalle
- 21: Hilfsmittel

## Patentansprüche

1. Verfahren zum Abtrennen von Metallen (20) und/oder Weichmachern (19) von Teilchen (3) mit einer polymeren Matrix, mit den Schritten
- Bereitstellen der Teilchen (3) entweder als körnige Teilchen mit einer mittleren Ausgangsteilchengröße in einem ersten Teilchengrößenbereich von 1 mm bis 12 mm oder als flächige Teilchen mit einer Wandstärke von maximal 2 mm und einer mittleren Ausgangsteilchengröße in einem ersten Teilchengrößenbereich von 2 mm bis 100 mm,
- Suspendieren (4) der bereitgestellten Teilchen (3) in einem flüssigen Lösungsmittel (5), das aus Lösungsmitteln ausgewählt ist, in welchen die polymere Matrix der Teilchen (3) ohne Auflösung der polymeren Matrix quillt, und Quellenlassen der polymeren Matrix der Teilchen (3) in dem Lösungsmittel (5),
- Ausüben von Scherkräften (9) auf die Teilchen (8), um die gequollene polymere Matrix in Fragmente (10) mit einer mittleren Fragmentgröße in einem zweiten Teilchengrößenbereich von 0,05 mm bis 0,8 mm aufzubrechen,
- separates Abtrennen der extrahierten Fragmente (15) und der Metalle (20) und/oder der Weichmacher (19) von dem Lösungsmittel (5).

2. Verfahren nach Anspruch 1,
- **wobei** eine Zusammensetzung des Lösungsmittels (5) eingestellt und/oder ein mit dem Lösungsmittel (5) nicht mischbares zusätzliches Extraktionsmittel hinzugefügt wird, um die Metalle (20) und/oder die Weichmacher (19) aus den Fragmenten (10) zu extrahieren,
- **wobei** die Fragmente (10) mit dem Lösungsmittel (5) oder mit dem Lösungsmittel (5) und dem zusätzlichen Extraktionsmittel extrahiert werden,
- **wobei** die extrahierten Fragmente (15) separat von den Metallen (20) und/oder den Weichmachern (19) von dem Lösungsmittel (5) oder von dem Lösungsmittel (5) und dem zusätzlichen Extraktionsmittel abgetrennt werden.

3. Verfahren nach Anspruch 2, **wobei** zum Einstellen der Zusammensetzung des Lösungsmittels (5) und/oder zum Hinzufügen des mit dem Lösungsmittel (5) nicht mischbaren zusätzlichen Extraktionsmittels eine Säure zugesetzt wird, wobei mit der Säure optional ein pH-Wert des Lösungsmittels im Bereich von 1 bis 5 eingestellt wird.

4. Verfahren nach Anspruch 3, **wobei** die Säure Kohlensäure mit einem CO₂-Partialdruck von mindestens 2,0 MPa auf das Lösungsmittel (5) ist.

5. Verfahren nach Anspruch 2, **wobei** zum Einstellen der Zusammensetzung des Lösungsmittels (5) und/oder zum Hinzufügen eines mit dem Lösungsmittel (5) nicht mischbaren zusätzlichen Extraktionsmittels eine Lauge zugesetzt wird, wobei mit der Lauge optional ein pH-Wert des Lösungsmittels von mindestens 9 eingestellt wird.

6. Verfahren nach Anspruch 5, **wobei** die Lauge wässrige oder alkoholische Natronlauge ist, die optional mindestens 8 Gewichtsprozent Natriumhydroxid enthält, oder wässrige oder alkoholische Kalilauge ist, die optional mindestens 8 Gewichtsprozent Kaliumhydroxid enthält.

7. Verfahren nach einem der vorhergehenden Ansprüche, **wobei** die Teilchen (3) mit einer auf PVC und/oder PVDF und/oder PE und/oder LDPE und/oder HDPE basierenden polymeren Matrix bereitgestellt werden, wobei die Weichmacher (19) optional zu mehr als 50 Gewichtsprozent Phthalat-Weichmacher sind und/oder 25 Gewichtsprozent bis 75 Gewichtsprozent eines die polymere Matrix aufweisenden Bruchteils der Teilchen (3) ausmachen.

8. Verfahren nach einem der vorhergehenden Ansprüche, **wobei** die Metalle (20) in den Teilchen (3) zu mehr als 50 Gewichtsprozent Blei und/oder Aluminium sind, wobei, optional, die Metalle (20) in den Teilchen (3) zu mehr als 50 Gewichtsprozent in Form von Metallsalzen und/oder Metalloxiden und/oder Metallhydroxiden vorliegen.

9. Verfahren nach einem der vorhergehenden Ansprüche, **wobei** die polymere Matrix quellen gelassen (7) wird bis sich ihr Volumen um 10 % bis 100 % erhöht hat und wobei die gequollene Matrix in Fragmente (10) aufgebrochen wird, deren mittlere Teilchengröße nicht größer als 50 % der durch die Quellung der polymeren Matrix angewachsene mittleren Ausgangsteilchengröße und bei flächigen Teilchen zudem nicht größer als 50 % deren durch die Quellung der polymeren Matrix angewachsenen Wandstärke ist.

10. Verfahren nach einem der vorhergehenden Ansprüche, **wobei** das Lösungsmittel (5) zu mehr als 50 Gewichtsprozent ausgewählt wird aus:
- Kohlenwasserstoffen und/oder
- Alkoholen und/oder
- Tetrahydrofuran (THF) oder Cyclohexanon.

11. Verfahren nach einem der vorhergehenden Ansprüche, **wobei**
- das Lösungsmittel (5) bei Normaldruck eine Siedetemperatur von mindestens 90 °C aufweist und/oder
- eine Temperatur des Lösungsmittels (5) beim Quellenlassen (7) in einem Temperaturbereich von 20 K bis 10 K unterhalb der Siedetemperatur des Lösungsmittels (5) eingestellt wird.

12. Verfahren nach einem der vorhergehenden Ansprüche, **wobei**
- zum Ausüben der Scherkräfte (9) auf die Teilchen (8) das Lösungsmittel (5) mit den darin suspendierten Teilchen (3) gerührt wird und oder zwischen gegenläufig rotierenden Scheiben hindurchgeführt wird und/oder
- zum Abtrennen der Fragmente (15) von dem Lösungsmittel (5), die Fragmente (15) von dem Lösungsmittel abgefiltert werden.

13. Verfahren nach einem der vorhergehenden Ansprüche,
- **wobei** eine Gesamtverfahrensdauer vom Suspendieren (4) der Teilchen (3) in dem Lösungsmittel (5) bis zum Abtrennen der Fragmente (15) von dem Lösungsmittel (5) nicht mehr als 60 min beträgt und/oder
- **wobei** Restkonzentrationen der Metalle (20) und/oder der Weichmacher (19) in den abgetrennten Fragmenten (15) weniger als 0,1 Gewichtsprozent und vorzugsweise nicht mehr als 0,05 Gewichtsprozent betragen.

14. Verfahren nach einem der vorhergehenden Ansprüche, **wobei** zum Abtrennen (18) der Metalle (20) und/oder Weichmacher (19) von dem Lösungsmittel (5) die Löslichkeit der Metalle (20) und/oder Weichmacher (19) in dem Lösungsmittel (5) durch Ändern des Drucks, der Temperatur, des pH-Werts und/oder der Zusammensetzung des Lösungsmittels (5) herabgesetzt wird.

15. Verfahren nach einem der vorhergehenden Ansprüche, **wobei** zum Abtrennen der Metalle (20) und/oder Weichmacher (19) von dem Lösungsmittel (5) das Lösungsmittel (5) verdampft wird, wobei das Lösungsmittel (5) anschließend kondensiert wird.
